# EUROPÄISCHE PATENTSCHRIFT

(11) **EP 0 396 854 B1**
(45) Veröffentlichungstag und Bekanntmachung des Hinweises auf die Patenterteilung: **06.10.1993**
(21) Anmeldenummer: 90102193.1
(22) Anmeldetag: 05.02.1990
(51) Int. Cl.: B06B 1/10, B28B 1/08, B30B 11/02, B22F 3/02

(54) **Kraftimpulsgenerator**
Power pulse generator
Générateur de secousses

(30) Priorität: 09.05.1989 GB 8988391
(43) Veröffentlichungstag der Anmeldung: 14.11.1990
(73) Patentinhaber: Paraschikov, Peter, Dipl.-Ing., Sofia (BG)
(72) Erfinder: Paraschikov, Peter, Dipl.-Ing., Sofia (BG)
(74) Vertreter: Finck, Dieter, Dr.Ing.

(56) Entgegenhaltungen:
- DE-A- 1 082 072
- GB-A- 477 017
- SOVIET INVENTIONS ILLUSTRATED, Woche E31, 15. September 1982, Sektion P/Q, Derwent Publications Ltd, London, GB & SU-A-870 152 (DNEPR ENG-CONS INST.) 07-10-1981
- SOVIET INVENTIONS ILLUSTRATED, Woche 8446, 2. Januar 1985, Sektion P/Q, Derwent Publications Ltd, London, GB & SU-A-1021 619 (HOUSING DES RESINS) 07-06-1983
- SOVIET INVENTIONS ILLUSTRATED, Woche 8912, 3. Mai 1989, Sektion P/Q, Derwent Publications Ltd, London, GB & SU-A-1423 391 (MOSC. FORESTRY INT.) 15-09-1988

## Beschreibung

Die Erfindung betrifft einen Kraftimpulsgenerator, der in Maschinen mit Impulswirkung eingesetzt werden kann, zum Beispiel in Maschinen für das Pressen von Metallen, Metallokeramik, Kermik und anderen Werkstoffen, sowie für das Zerkleinern von Gesteinen.

Ein bekannter Kraftimpulsgenerator besteht aus einem unbeweglichen Körper, an welchem in Richtung der Kraftübertragung ein Impulskörper beweglich montiert ist, wobei zwischen den beiden ein Hohlraum ausgebildet ist. In diesem Hohlraum ist ein Kraftumformer angeordnet, der durch einen Motor angetrieben wird.
Der Kraftumformer enthält einen im unbeweglichen Körper gelagerten Separator mit kreisförmig angeordneten Sitzen, wobei in diesen Sitzen kugel- (vgl. SU-A-391 865) oder kegelförmige (vgl. FR-A-2.041.437) Körper montiert sind. Diese Körper sind im Kontakt mit gleichermaßen profilierten wellenförmigen Oberflächen, welche in die Stirnflächen des unbeweglichen und des Impulskörpers ausgebildet sind (1),(2).

Ein Nachteil des bekannten Kraftimpulsgenerators liegt in die kleine Kontaktfläche zwischen den kugel- oder kegelförmigen Körpern und den profilierten wellenförmigen Oberflächen des unbeweglichen Körpers und des Impulskörpers, was zur Einschränkung seines Einsatzes nur für relativ kleine Kraftimpulse führt.

Ein anderer Nachteil liegt darin, daß während des Betriebes der Kontakt zwischen den kugel- oder kegelförmigen Körpern und den profilierten wellenförmigen Oberflächen unterbrochen wird, was die Ursache für Schlagbeanspruchungen ist, die zu einer kurzen Lebensdauer, einem niedrigen Wirkungsgrad und einem erhöhten Lärm führen.

Ein weiterer Nachteil liegt in die ungleichmäßige Verteilung des Kräfteflußes in den kraftübertragenden Oberflächen, was eine Verformung durch die erzeugten Biegespannungen hervorruft.

Ein anderer Nachteil ist das Vorhandensein eines reaktiven Moments, welches durch den rotierenden Kraftumformer erzeugt wird.

Der Erfindung liegt die Aufgabe zugrunde einen Kraftimpulsgenerator für die Erzeugung von Kraftimpulsen mit hohen Werten der Kraft und der Amplitude der Versetzung des Impulskörpers zu entwickeln, und dies bei kleinen Außenmaßen und Masse, hohem Wirkungsgrad, heragbesetztem Lärm, erhöhter Lebensdauer und neutralisierten Seitenkräften.

Diese Aufgabe wird durch einen Kraftimpulsgenerator gemäß anspruch 1 gelöst. Dieser enthält unter anderen einen unbeweglichen Körper, mit dem in Richtung der Kraftübertragung ein Impulskörper beweglich verbunden ist, wobei im Hohlraum zwischen ihnen ein Kraftimpulsformer angeordnet ist, der aus zwei gleichen Kurbelmechanismen besteht, jeder von denen ein Zwischengelenksegment enthält mit zweiseitig in der Achse angeordneten Zapfen, die durch Pleuelstangen mit einer gemeinsamen Kurbelwelle verbunden sind.Das Zwischengelenksegment besitzt doppelt-konvexe, gleiche runde zylindrische Oberflächen, die in Kontakt sind mit entsprechenden Oberflächen von der einen Seite von unteren und oberen Segmentarmen im Kontakt, wobei die gleichen konkaven zylindrischen runden Oberflächen ihrer anderen Seite mit entsprechenden Oberflächen eines oberen und eines unteren Gelenksegments im Kontakt sind.

Das untere Gelenksegment ist am Impulskörper befestigt, während das obere Gelenksegment an den unbeweglichen Körper befestigt ist. Durch den unbeweglichen Körper und das obere Gelenksegment ist eine zylindrische Schmierbohrung gebohrt, welche mit einer länglichen Schmieröffnung im oberen und im unteren Segmentarm, sowie mit einem Schmierschlitz im Zwischengelenksegment verbunden.

Der Impulskörper ist mittels Feder und Andrücker elastisch an den unbeweglichen Körper angedrückt.

Die zentrale Winkel des Kreisbogens der Gelenksegmente und der Segmentarme sind nicht größer als 45°.

Die Achsen der Zwischensegmentgelenke können in einer horizontalen Ebene mit der Kurbelwelle oder in drei horizontalen Ebenen angeordnet sein.

Ein Vorteil des erfindungsgemäßen Kraftimpulsgenerators liegt in dem besonders hohen Wert des Kraftimpulses (1000000 kN und mehr) infolge der großen Kontaktfläche der runden zylindrischen Oberflächen der Zwischengelenksegmente, der oberen und unteren Segmentarmen und der oberen und unteren Gelenksegmenten.

Ein anderer Vorteil liegt in dem stoßfreien Betrieb des Kraftimpulsgenerators, da der Kontakt zwischen den runden zylindrischen Oberflächen der Gelenksegmente und der Segmentarme während dem Betrieb nicht unterbrochen wird, was zur Verbesserung der Schmierung, zur Erhöhung des Wirkungsgrads, zur Herabsetzung des Lärms und zur Erhöhung der Lebensdauer bei erhöhter Amplitude der Versetung des Impulskörpers beiträgt.

Ein weiterer Vorteil liegt in die gleichmäßige Verteilung des Kraftflußes infolge der großen Deckung der Lagerfläche durch die Gelenksegmente und Segmentarme über die kraftübertragende Oberflächen.

Ein anderer Vorteil liegt in das Neutralisieren der ungewünschten Seitenkräfte infolge der entgegengesetzten Anordnung und Wirkung beider Kurbelmechanismen.

Die Erfindung soll nachstehend an Ausführungsbeispiele näher erläutert werden. Die zugehörigen Zeichnungen zeigen:

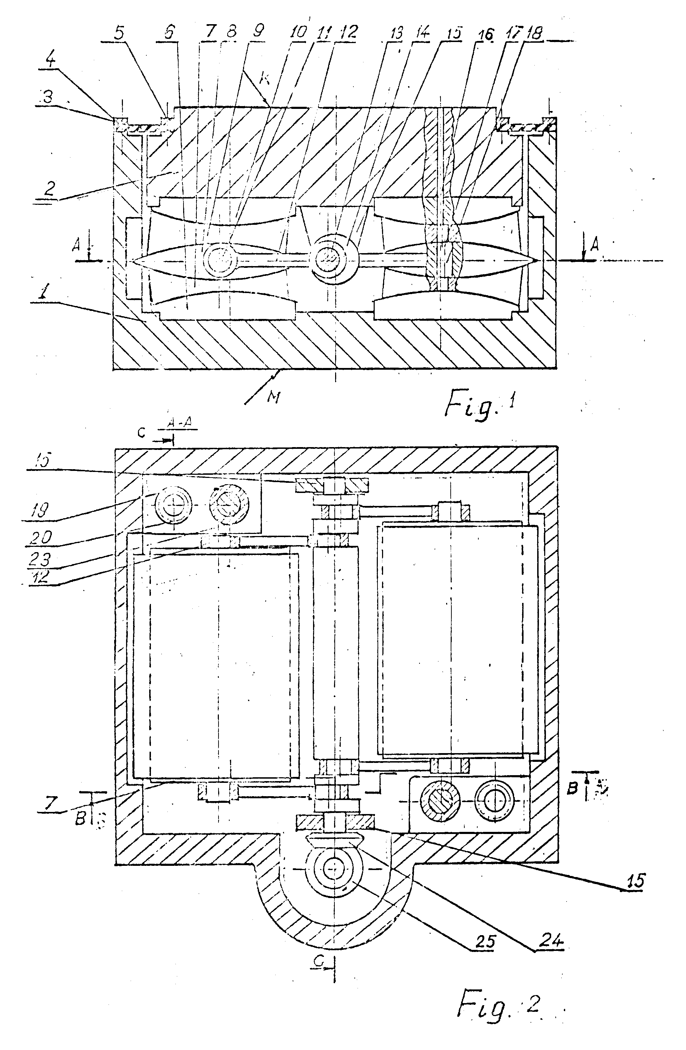

Fig.1: einen vertikalen Querschnitt durch einen Generator;
Fig.2: einen vertikalen Längsschnitt entlang A-A in Fig. 1;
Fig.3: einen horizontalen Schnitt entlang C-C in Fig. 1;
Fig.4: einen Teilschnitt I durch das Zwischengelenksegment, den oberen und den unteren Segmentarm und die Führungsleiste in Fig.3;
Fig.5: ein Prinzipdiagramm des Kraftimpulsgenerators;
Fig.6: einen vertikalen Querschnitt durch einen Kraftimpulsgenerator vom desaxialen Typ;
Fig.7: einen vertikalen Querschnitt durch einen Kraftimpulsgenerator mit Anordnung der Achsen der Zwischengelenksegmenten und der Kurbelwelle in drei horizontalen Ebenen und mit Hebelantrieb;
Fig.8: einen vertikalen Längsschnitt entlang D-D und E-E in Fig.7.

Der Kraftimpulsgenerator besteht aus einem Impulskörper 1 mit Kastenform, der mit einem unbeweglichen Körper 2 beweglich verbunden ist und durch Dichtung 3, Andrückleiste 4 und Leiste 5 abgeschlossen ist, so daß sich zwischen ihnen ein geschlossener Raum bildet. Zwischen dem Impulskörper 1 und dem unbeweglichen Körper 2 ist im geschlossenen Raum ein Kraftumfermer angeordnet, der zwei gleiche Kurbelmechanismen enthält, jeder von denen aus folgenden in Reihe angeordneten Elementen besteht: unteres Gelenksegment 6, angeordnet im Impulskörper 1, Segmentarm 7, Zwischengelenksegment 8, oberer Segmentarm 9 und oberes Gelenksegment 10, angeordnet in dem unbeweglichen Körper 2.

Das Zwischengelenksegment 8 besitzt Zapfen 11, die beiderseitig in der Achse angeordnet sind und mittels Pleuelstange 12 mit den exzentrischen Zapfen 13 der Kurbelwelle 14 verbunden sind, die im Lagerkörper 15 gelagert ist. Im unbeweglichen Körper 2 und im oberen Gelenksegment 9 befinden sich die senkrechte zylindrische Schmierbohrung 16 und die längliche Schmieröffnung 17, und im Zwischengelenksegment 8 - ein Schmierschlitz 18.

Der Impulskörper 1 und der unbewegliche Körper 2 sind mittels die Feder 19 elastisch verbunden, die in eine Hülse 20 eingesetzt ist, und sind durch den Andrücker 21 angedrückt, wobei sie durch die Führungssäule 22 und Führungsbuchse 23 axial beweglich sind. Die Kurbelwelle 14 ist mittels getriebenes Zahnrad 24, treibendes Zahnrad 25, treibende Welle 26 und Kupplung 27 mit dem Motor 28 verbunden.

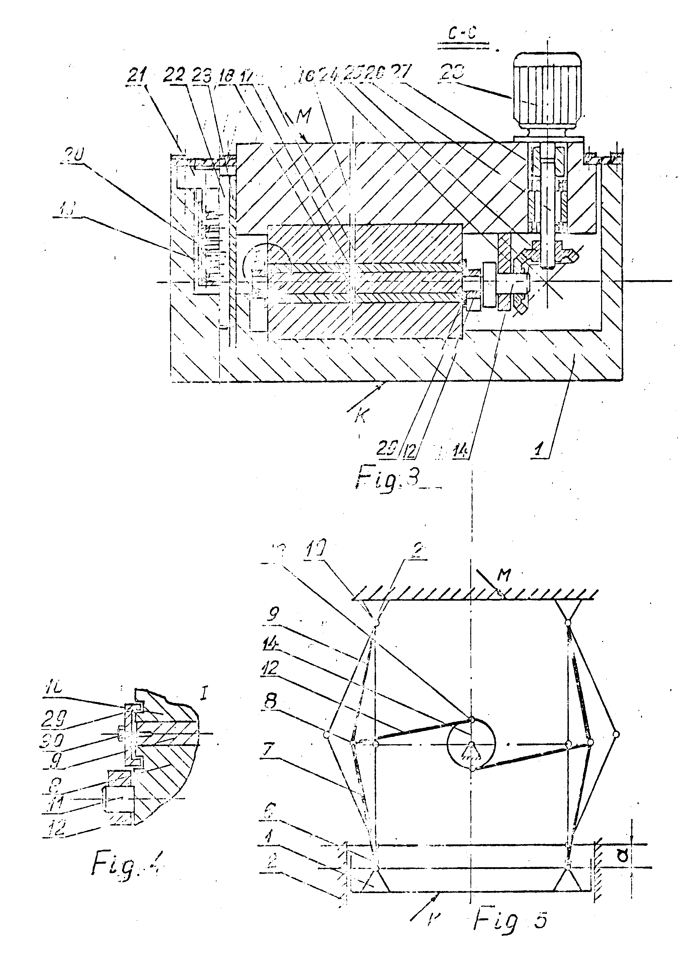

Das Zwischengelenksegment 8 ist beweglich am unteren 6 und am oberen 10 Gelenksegment mittels Führungsleisten 29 befestigt und seitlich mittels Schrauben 30 an dem unteren 7 und dem oberen 9 Segmentarm befestigt (vgl. Figur 4.).

Die untere Stirnfläche "K" des Impulskörpers 1 und die obere Stirnfläche "M" des unbeweglichen Teils 2 sind als kraftübertragende Flächen ausgebildet, durch welche der Generator mit der Arbeitsmaschine (Presse, Brecher u.a.) verbunden ist.

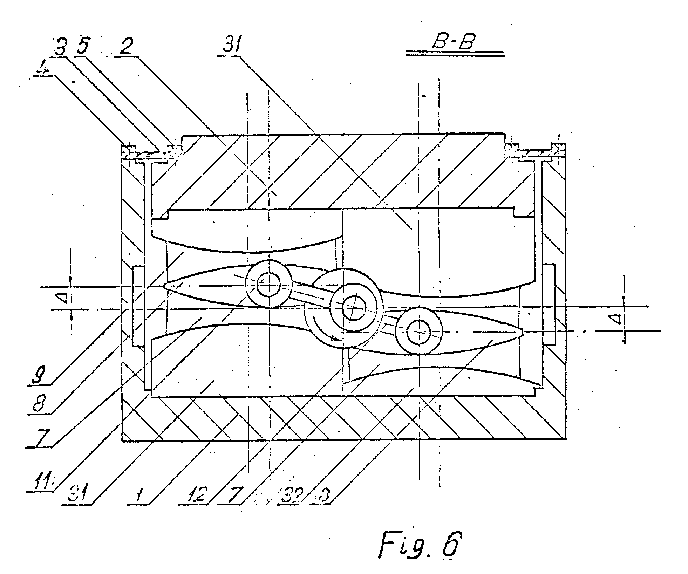

Fig.6 zeigt einen Kraftimpulsgenerator in welchem das untere Gelenksegment 6 und das obere Gelenksegment 10 entsprechend durch ein hohes Gelenksegment 31 und ein niedriges Gelenksegment 32 ersetzt sind, wodurch eine Achsabweichung Δ erzielt wird.

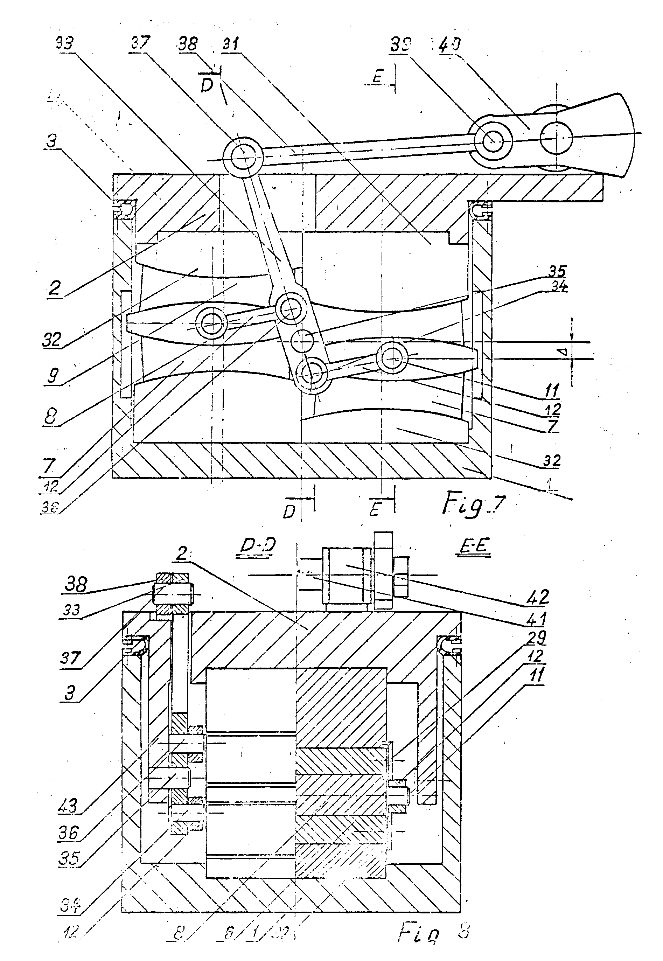

Fig.7 und Fig.8 zeigen einen Kraftimpulsgenerator vom desaxialen Typ mit Hebelantrieb, in welchem die Zwischengelenksegmente 8 mit dem Arm 33 mittels Zapfen 11, Pleuelstangen 12, untere Achse 34 und obere Achse 36 verbunden sind, wobei der Arm 33 in die Stützachse 35 gelagert ist und in seinem oberen Ende mittels Achse 37 mit der Pleuelstange 38 verbunden ist, die in ihrem anderen Ende mit der exzentrischen Achse 39 verbunden ist, welche am Kurbelarm 40 der Kurbelwelle 41 befestigt ist, die im Grundlager 42 gelagert ist. Die Stützachse 35 ist an die Konsole 43 befestigt, welche ein Bestandteil des unbeweglichen Teils 2 ist.

Die Wirkungsweise des erfindungsgemäßigen Kraftimpulsgenerators ist wie folgt:
Beim Betrieb des Motors 28 wird das Drehmoment über die Kupplung 27, die treibende Welle 26, das treibende Zahnrad 25 und das getriebene Zahnrad 24 zur Kurbelwelle 14 übertragen, welche mittels der exzentrischen Zapfen 13, der Pleuelstangen 12 und der Zapfen 11 hin- und hergehend und entgegengesetzt die Zwischengelenksegmente 8 antreibt, die ein Abweichen von der neutralen Position der unteren 7 und oberen 9 Segmentarmen in bezug auf die untere 6 und obere 10 Gelenksegmente hervorrufen, wobei der Impulskörper 1 unter Einwirkung der Feder 19 und der Führungsleiste 29 gegen das unbewegliche Teil 2 in Abstand "a" versetzt wird. Bei Rückkehr der Zwischengelenksegmente 8 in neutraler Position wird der Impulskörper 1 in entgegengesetzter Richtung in Abstand "a" versetzt und überträgt einen Kraftimpuls der Arbeitsmaschine mittels der kraftübertragenden Flächen "M" und "K". Während des Betriebs wird der Impulskörper 1 in bezug auf den unbeweglichen Körper 2 versetzt mittels der Führungssäulen 22 und Führungsbuchsen 23, wobei das Schmieren der Arbeitsflächen durch die zylindrische Schmierbohrung 16, die längliche Schmieröffnung 17 und den Schmierschlitz 18 erfolgt.

Der Betrieb des Kraftimpulsgenerators vom desaxialen Typ (Fig.6) ist gekennzeichnet durch schärfere Kraftimpulse und größere Stützfläche der Gelenksegmente - oberer 10, Zwischen-8 und unterer 6 - und der Segmentarme - oberer 9 und unterer 7.

Der Antrieb des Kraftimpulsgenerators vom desaxialen Typ (Fig.7 und Fig.8) erfolgt durch den Kurbelmechanismus, der außerhalb angeordnet ist. Die Bewegung der Kurbelwelle 41 wird mittels des Pleuelstange 38 zum Arm 33 übertragen, der eine schwingende Bewegung um die Stützachse 35 ausführt, und treibt mittels der oberen Achse 36 und der unteren Achse 34 und der Pleuelstangen 12 die Zwischengelenksegmente 8 in zueinander entgegengesetzten Richtungen an, wobei ein Kraftimpuls erzeugt wird.

## Patentansprüche

1. Kraftimpulsgenerator, der einen unbeweglichen Körper enthält, mit welchem in Richtung der Kraftübertragung ein Impulskörper beweglich verbunden ist, wobei im Hohlraum zwischen ihnen ein Kraftimpulsformer angeordnet ist, dadurch **gekennzeichnet,** daß der Kraftimpulsformer aus zwei gleichen Kurbelmechanismen besteht, jeder von denen ein Zwischengelenksegment (8) enthält, welches beiderseitig in der Achse Zapfen (11) aufweist, die mittels Pleuelstangen (12) und exzentrische Zapfen (13) mit einer gemeinsamen Kurbelwelle (14) verbunden sind, wobei das Zwischengelenksegment doppelt konvexe, gleiche runde zylindrische Oberflächen aufweist, die im Kontakt sind mit entsprechenden Oberflächen von der einen Seite eines unteren (7) und eines oberen (9) Segmentarms, wobei die gleichen konkaven, runden zylindrischen Oberflächen ihrer anderen Seite im Kontakt sind mit entsprechenden Oberflächen eines oberen (6) und eines unteren (10) Gelenksegments, und das untere Gelenksegment (6) ist am Impulskörper (1) befestigt, während das obere Gelenksegment (10) am unbeweglichen Körper (2) befestigt ist, und durch den unbeweglichen Körper (2) und das obere Gelenksegment (10) eine zylindrische Schmierbohrung (16) ausgebildet ist, in dem unteren (7) und dem oberen (9) Segmentarm eine längliche Schmieröffnung (17) und in dem Zwischengelenksegment (8) ein Schmierschlitz (18) ausgebildet sind, wobei der Impulskörper (1) mittels Feder (19), Hülse (20) und Andrücker (21) an den unbeweglichen Körper (2) elastisch angedrückt ist.

2. Generator nach Anspruch 1, dadurch gekennzeichnet, daß der zentrale Winkel des Kreisbogens des unteren Gelenksegments (6), des unteren Segmentarms (7), des Zwischengelenksegments (8), des oberen Gelenkarms (9) und des oberen Gelenksegments (10) nicht größer als 45° ist.

3. Generator nach Ansprüche 1 und 2, dadurch gekennzeichnet, daß die Achsen der Zwischengelenksegmente (8) und der Kurbelwelle (14) in einer horizontalen Ebene liegen.

4. Generator nach Ansprüche 1 bis 3, dadurch gekennzeichnet, daß die Achsen der Zwischengelenksegmente (8) und die Achse der Kurbelwelle (14) in drei horizontale Ebenen liegen.

## Claims

1. Force impulse generator which comprises a stationary body to which, in direction of the force transmission, there is connected moveably an impulse body, in the cavity between them being disposed a force impulse converter, characterized in that the force impulse converter consists of two identical crank mechanisms, each of which comprises an intermediate hinge segment (8) with necks (11) disposed on both sides in its axis, which are connected by means of connecting rods (12) and eccentric necks (13) to a common crankshaft (14), the intermediate hinge segment having double-convex, identical round cylindrical surfaces which are in contact with respective surfaces of the one side of bottom (7) and top (9) segment arms, the identical, concave round cylindrical surfaces of their other side being in contact with respective surfaces of top (6) and bottom (10) hinge segments, the bottom hinge segment (6) being attached to the impulse body (1), while the top hinge segment (10) is attached to the stationary body (2), through the stationary body (2) and the top hinge segment (10) being bored a cylindrical lubricating hole (16), in the bottom (7) and the top (9) segment arms being formed an elongated lubricating hole (17) and in the intermediate hinge segment (8) being formed a lubricating slot (18), the impulse body (1) being elastically pressed against the stationary body (2) by means of a spring (19), a sleeve (20) and a clamp (21).

2. Generator according to claim 1, characterized in that the central angle of the circular arc of the bottom hinge segment (6), the bottom segment arm (7), the intermediate hinge segment (8), the top hinge arm (9) and the top hinge segment (10) is not greater than 45°.

3. Generator according to claims 1 and 2, characterized in that the axes of the intermediate hinge segments (8) and the crankshaft (14) are in a horizontal plane.

4. Generator according to claims 1 to 3, characterized in that the axes of the intermediate hinge segments (8) and the axis of the crankshaft (14) are disposed in three horizontal planes.

## Revendications

1. Générateur d'impulsions de puissance comprenant un corps immobile auquel, en direction de la transmission de force, est attaché d'une manière mobile un corps d'impulsions, dans la cavité entre eux étant disposé un convertisseur d'impulsions de puissance, caractérisé en ce que le convertisseur d'impulsions de puissance est constitué de deux mécanismes à bielle et manivelle identiques, chacun d'eux comportant un segment d'articulation intermédiaire (8) avec des manetons (11) bilatéralement disposés dans l'axe, reliés par des bielles (12) et des manetons excentriques (13) à un vilebrequin commun (14), le segment d'articulation intermédiaire possédant des surfaces biconvexes, identiques, rondes et cylindriques en contact avec des surfaces respectives d'un côté des bras de segment inférieur (7) et supérieur (9), les surfaces identiques, concaves, rondes et cylindriques de leur autre côté étant en contact avec des surfaces respectives des segments d'articulation supérieur (6) et inférieur (10), le segment d'articulation inférieur (6) étant attaché au corps d'impulsions (1), tandis que le segment d'articulation supérieur (10) soit attaché au corps immobile (2), et à travers le corps immobile (2) et le segment d'articulation supérieur (10) se formant une ouverture cylindrique d'huile (16), dans les bras de segment inférieur (7) et supérieur (9) se formant une ouverture allongée d'huile (17) et dans le segment d'articulation intermédiaire (8) se formant une fente d'huile (18), le corps d'impulsions (1) étant élastiquement serré au corps immobile (2) par l'intermédiaire d'un ressort (19), d'une douille (20) et d'un serre-flan (21).

2. Générateur selon revendication 1, caractérisé en ce que l'angle central de l'arc circulaire du segment d'articulation inférieur (6), du bras de segment inférieur (7), du segment d'articulation intermédiaire (8), du bras de segment supérieur (9) et du segment d'articulation supérieur (10) n'est pas supérieur à 45°.

3. Générateur selon les revendications 1 et 2, caractérisé en ce que les axes des segments d'articulation intermédiaires (8) et l'axe du vilebrequin (14) se trouvent dans un plan horizontal.

4. Générateur selon les revendications 1 à 3, caractérisé en ce que les axes des segments d'articulation intermédiaires (8) et l'axe du vilebrequin (14) se trouvent dans trois plans horizontaux.
